# EUROPÄISCHE PATENTSCHRIFT

(11) **EP 2 663 420 B1**
(45) Veröffentlichungstag und Bekanntmachung des Hinweises auf die Patenterteilung: **19.07.2017**
(21) Anmeldenummer: 12701054.4
(22) Anmeldetag: 04.01.2012
(51) Int. Cl.: B23K 37/04, B23K 37/047, B23Q 3/06, F16D 7/04, B23K 37/00, F16D 7/10

(54) **HALTERUNGSVORRICHTUNG MIT EINER ÜBERLASTSICHERUNGSKUPPLUNG ZUR HALTERUNG WENIGSTENS EINES WERKZEUGGLIEDES IN EINEM FAHRZEUGKAROSSERIE-FERTIGUNGSSYSTEM**
RETENTION DEVICE HAVING AN OVERLOAD PROTECTION COUPLING FOR THE RETENTION OF AT LEAST ONE TOOL ELEMENT IN A VEHICLE BODY MANUFACTURING SYSTEM
DISPOSITIF DE SUPPORT COMPRENANT UN ACCOUPLEMENT LIMITEUR DE COUPLE POUR MAINTENIR AU MOINS UN ÉLÉMENT D'OUTIL DANS UN SYSTÈME DE FABRICATION DE CARROSSERIES DE VÉHICULES

(30) Priorität: 10.01.2011 DE 102011008194
(43) Veröffentlichungstag der Anmeldung: 20.11.2013
(73) Patentinhaber: ThyssenKrupp System Engineering GmbH, 74076 Heilbronn (DE)
(72) Erfinder: KASPER, Helmut, 66687 Wadern (DE); KIPPING, Tino, 66839 Schmelz (DE)
(74) Vertreter: thyssenkrupp Intellectual Property GmbH
(86) Internationale Anmeldenummer: PCT/EP2012/000026
(87) Internationale Veröffentlichungsnummer: WO 2012/095277

(56) Entgegenhaltungen:
- DE-A1- 3 717 616
- DE-A1- 3 907 553
- DE-U1- 20 006 367
- DE-U1- 29 509 049
- US-A1- 2006 181 092

## Beschreibung

### Stand der Technik

Die vorliegende Erfindung geht aus von einer Halterungsvorrichtung zur Halterung wenigstens eines zu haltenden Teils in einem Fahrzeugkarosserie-Fertigungssystem gemäß dem Oberbegriff des Anspruchs 1 (siehe, z.B., DE295 09 049 U1). Solche Halterungsvorrichtungen sind allgemein bekannt und werden in Fahrzeugkarosserie-Fertigungssystemen insbesondere zur Halterung und automatischen Steuerung von Werkzeugen eingesetzt, welche unmittelbar zur Bearbeitung der Fahrzeugkarossiere dienen, wie beispielsweise Schweißgeräte, oder welche zum Greifen von Rahmenteilen der Fahrzeugkarosserie vorgesehen sind, beispielsweise Konsolen. Durch fehlerhafte Bedienung oder Ansteuerung dieser Halterungsvorrichtung oder bei der Aufnahme falscher Werkzeuge oder Bauteile besteht die Gefahr, dass die Halterungsvorrichtungen beschädigt werden. Dies kann beispielsweise durch Kollisionen der bewegten Werkzeuge oder Bauteile mit anderen Werkzeugen, Bauteilen oder dergleichen geschehen. Die Reparaturen der Halterungsvorrichtungen sind einerseits kostenintensiv und verursachen andererseits einen Stillstand des gesamten Fahrzeugkarosserie-Fertigungssystems.

Die Druckschrift EP 1 736 274 A2 schlägt zur Lösung dieses Problems eine Vorrichtung zum Aufbau eines Fahrzeugkarosserierahmens in einer Schweißstation eines Fahrzeugkarosserie-Fertigungssystems vor, welches zur Aufnahme von Rahmenteilen eine Befestigungskonsole aufweist, die über einen einzelnen zentralen Befestigungsbolzen an einer Haltevorrichtung befestigt ist. Der zentrale Befestigungsbolzen weist einen als Sollbruchstelle fungierenden geschwächten Bereich mit reduziertem Durchmesser auf, welcher beim Auftreten einer entsprechenden mechanischen Auslösekraft bricht und somit einer Beschädigung der Haltevorrichtung vorbeugt. Der zentrale Befestigungsbolzen fungiert somit als Überlastsicherungskupplung. Nach einem Bruch des Befestigungsbolzens wird der gebrochene Befestigungsbolzen zur Wiederherstellung der Kopplung zwischen der Befestigungskonsole und der Haltevorrichtung durch einen neuen Bolzen ersetzt.

Es ist die Aufgabe der vorliegenden Erfindung eine Halterungsvorrichtung mit einer Überlastsicherungskupplung zur Halterung wenigstens eines zu haltenden Teils in einem Fahrzeugkarosserie-Fertigungssystem zur Verfügung zu stellen, welche beim Auftreten einer definierten Auslösekraft eine Entkopplung zwischen der Halterungsvorrichtung und dem Werkzeugglied gewährleistet, wobei gleichzeitig eine Wiederherstellung der Kopplung in einfacher und zeitsparender Weise ermöglicht wird und ferner die zur Entkopplung benötigte Auslösekraft flexibel und präzise justierbar ist.

### Offenbarung der Erfindung

Gelöst wird diese Aufgabe mit einer Halterungsvorrichtung zur Halterung wenigstens eines zu haltenden Teils in einem Fahrzeugkarosserie-Fertigungssystem gemäß dem Anspruch 1. Die erfindungsgemäße Vorrichtung hat gegenüber dem Stand der Technik den Vorteil, dass eine Entkopplung zwischen der ersten und zweiten Kupplungseinheit nicht durch ein Brechen eines Befestigungsbolzens, sondern stattdessen durch eine Überwindung der Klemmkraft erfolgt, wodurch das Verbindungsmittel außer Eingriff mit den Klemmelementen gelangt. Vorteilhafterweise ist zur Wiederherstellung der Kopplung zwischen der ersten und zweiten Kupplungseinheit somit kein Austausch eines defekten Teils erforderlich, wodurch sich die notwendige Unterbrechungsdauer im Betrieb des Fahrzeugkarosserie-Fertigungssystems erheblich verringert.
Vorteilhafte Ausgestaltungen und Weiterbildungen der Erfindung sind den Unteransprüchen, sowie der Beschreibung unter Bezugnahme auf die Zeichnungen entnehmbar.
Gemäß einer bevorzugten Weiterbildung der vorliegenden Erfindung ist vorgesehen, dass das wenigstens eine Klemmelement mittels des Elements in Richtung des Verbindungsmittels elastisch vorgespannt ist, wobei das Element bevorzugt einen Kraftspeicher zur Kraftbeaufschlagung des wenigstens einen Klemmelements in Richtung des Verbindungsmittels umfasst und wobei besonders bevorzugt ein Mittel zur Einstellung der in Richtung des Verbindungsmittels wirkenden Kraft des Kraftspeichers vorgesehen ist. Vorteilhafterweise ist das Klemmelement in Richtung des Verbindungsmittels mittels des Kraftspeichers, welcher beispielsweise eine Druckfeder umfasst, elastisch vorgespannt, wodurch die Klemmkraft zwischen dem Klemmelement und dem Verbindungsmittel erzeugt wird. Die Haltekraft der Verbindung hängt unter anderem von der Vorspannung des Klemmelements in Richtung des Verbindungsmittels ab, welche vorzugsweise durch eine Justierung der von dem Kraftspeicher auf das Klemmelement wirkenden Kraft einstellbar ist. Übersteigt die zwischen der ersten und zweiten Kupplungseinheit wirkende Kraft einen bestimmten Auslösewert, so wird das elastisch vorgespannte Klemmelement entgegen der Vorspannung zurückgeschoben und das Verbindungsmittel kommt frei. Anschließend kann eine Kopplung zwischen der ersten und der zweiten Kopplungseinheit in einfacher Weise wiederhergestellt werden, indem das Verbindungsmittel mit entsprechender Kraft und insbesondere erneut unter Überwindung der Vorspannung in seiner Ausgangsposition relativ zu dem Klemmelement angeordnet wird. Ein weiterer Vorteil der erfindungsgemäßen Haltevorrichtung ist, dass kleine Auslenkungen des zu haltenden Teils gegenüber der Halterungsvorrichtung nicht unmittelbar zu einer Entkopplung führen. Vielmehr wird bei kleinen Auslenkungen vorzugsweise ein Rückfedern des Verbindungsmittels in seine Ausgangsposition möglich. Die Klemmelemente umfassen beispielsweise Klemmstifte, Klemmkugeln oder dergleichen.

Gemäß einer bevorzugten Weiterbildung der vorliegenden Erfindung ist vorgesehen, dass die zweite Kupplungseinheit wenigstens drei in einer Hauptebene radial angeordnete Klemmelemente aufweist, welche im Wesentlichen rotationssymmetrisch um das zur Hauptebene senkrecht ausgerichtete Verbindungsmittel angeordnet sind. In vorteilhafter Weise ist die Auslösekraft aufgrund der rotationssymmetrischen Anordnung der wenigstens drei Klemmelemente für alle auf das zu haltende Teil parallel zur Hauptebene wirkenden Kraftkomponenten nahezu gleich. Das Verbindungsmittel, welches vorzugsweise einen Verbindungsstift umfasst, wird vorzugsweise ausschließlich durch die drei Klemmelemente, welche beispielsweise als Klemmstifte ausgebildet sind, kraft- und formschlüssig mit der zweiten Kupplungseinheit gegenüber Verkippbewegungen in einer zur Hauptebene senkrechten Ebene gehalten, so dass kleine Auslenkungen nicht sofort zu einer Entkopplung der Überlastsicherungskopplung führen. Ferner wird mittels der rotationsymmetrisch angeordneten Klemmelemente eine präzise Positionierung des Verbindungsmittels im Zentrum der sternförmig angeordneten Klemmelemente ermöglicht. Es ist für einen Fachmann selbstverständlich, dass die Anzahl der Klemmelemente optional auch größer als drei und insbesondere gleich vier, fünf, sechs oder sieben sein kann. Durch eine größere Anzahl von Klemmelemente kann beispielsweise eine erhebliche Erhöhung der Auslösekraft erzielt werden. Bei einer Verwendung von genau drei Klemmelementen sind die drei Klemmelemente in der Hauptebene vorzugsweise jeweils um 120 Grad zueinander versetzt angeordnet, so dass der Verbindungsstift allein durch die drei Klemmelemente zentriert wird. Bei einer Verwendung von mehr als drei Klemmelemente sind die Klemmelemente vorzugsweise derart angeordnet, dass zwischen benachbarten Klemmelementen jeweils gleiche Winkel in der Hauptebene um das Verbindungsmittel herum ausgebildet sind, um eine Zentrierung des Verbindungsmittels zu gewährleisten.

Gemäß einer bevorzugten Weiterbildung der vorliegenden Erfindung ist vorgesehen, dass der Verbindungsstift in einem Kupplungsbereich eine Querschnittänderung aufweist, wobei das wenigstens eine Klemmelement im Kupplungsbereich form- und/oder kraftschlüssig auf das Verbindungsmittel einwirkt. Die Querschnittänderung im Kupplungsbereich führt dazu, dass das Verbindungsmittel entlang seiner Längserstreckung eine Schräge aufweist, wodurch im Kopplungszustand die Verbindung zwischen der ersten und zweiten Kupplungseinheit wahlweise ausschließlich eine Formschlussverbindung zwischen dem Verbindungsmittel und den Klemmelementen umfasst oder alternativ eine Kraft-Formschluss-Verbindung, wenn die Klemmelement auch in der Ausgangsposition auf das Verbindungsmittel drücken und so einen Reibschluss erzeugen. In beiden Fällen muss jedoch während des Entkopplungsvorgangs die Klemmkraft überwunden werden, entweder durch Überwindung der Reibung und/oder durch eine Bewegung der Klemmelemente entgegen ihrer Vorspannung, wenn ein einen größeren Querschnitt aufweisender Bereich des Verbindungsmittels die Klemmelemente passieren muss. Vorzugsweise weist das wenigstens eine Klemmelement jeweils auf einer dem Verbindungsmittel zugewandten Seite eine sich verjüngende Spitze auf, welche besonders bevorzugt auf den Kupplungsbereich einwirkt. Wenn das Verbindungsmittel mit der ersten Kupplungseinheit fest verbunden ist, verändert sich der Querschnitt des Verbindungsmittels im Kupplungsbereich insbesondere derart, dass der Querschnitt in Richtung der zweiten Kupplungseinheit größer wird. Analog wird der Querschnitt des Verbindungsmittels im Kupplungsbereich in Richtung der ersten Kupplungseinheit größer, wenn das Verbindungsmittel mit der zweiten Kupplungseinheit fest verbunden ist. Auf diese Weise wird sichergestellt, dass durch den Kraftschluss zwischen den Klemmelemente, insbesondere den Spitzen der Klemmelemente, und dem Kupplungsbereich eine Zugkraft auf das Verbindungsmittel in Kopplungsrichtung ausgeübt wird. Zur Entkopplung muss ein größerer Querschnitt des Verbindungsmittels die Klemmelemente passieren, wodurch die Klemmelemente entgegen ihrer Vorspannung radial nach außen gedrückt werden. Der Kupplungsbereich dient demnach auch als Toleranz- und Spielausgleich zwischen der ersten und zweiten Kupplungseinheit. Vorzugsweise umfasst das Verbindungsmittel einen Verbindungstift mit einem Kugelkopf, auf dessen Kugelfläche die Spitze des wenigstens einen Klemmelements einwirkt.

Gemäß einer bevorzugten Weiterbildung der vorliegenden Erfindung ist vorgesehen, dass zur Einstellung der Auslösekraft der Abstand zwischen dem Kupplungsbereich, insbesondere dem Kugelkopf, und dem wenigstens einen Klemmelement entlang einer zur Hauptebene senkrechten Richtung einstellbar ist. Durch eine Verschiebung des Kupplungsbereichs entlang der Längserstreckung des Verbindungsmittels ändert sich der Querschnitt des Kupplungsbereichs relativ zu dem wenigstens einen Klemmelement, so dass die Auslösekraft modifiziert wird. Vorzugsweise weist das wenigstens eine Klemmelement ein Außengewinde auf, welches zur Herstellung der festen Verbindung zur ersten oder zweiten Kupplungseinheit in ein Innengewinde der ersten oder zweiten Kupplungseinheit eingreift, so dass durch Rotation des Verbindungselements um seine eigene Achse die zur Hauptebene senkrechte Relativposition zwischen dem Kupplungsbereich und dem wenigstens einen Klemmelement und somit die Auslösekraft einstellbar ist.

Gemäß einer bevorzugten Weiterbildung der vorliegenden Erfindung ist vorgesehen, dass die erste Kupplungseinheit eine zur Hauptebene parallele erste Kontaktfläche und die zweite Kupplungseinheit eine zur ersten Kontaktfläche im Wesentlichen parallele zweite Kontaktfläche aufweist, wobei die erste Kontaktfläche an der zweiten Kontaktfläche anliegt. In vorteilhafter Weise dienen die erste und zweite Kontaktfläche als gegenseitige Auflageflächen zur Kraftaufnahme von rechtwinklig zur Hauptebene wirkenden Kräften, welche nicht zu einer Entkopplung zwischen ersten und zweiten Kupplungseinheit führen sollen. Darüberhinaus dienen die ersten und zweiten Kontaktflächen als Ausrichtungshilfen, da sich die erste und zweite Kontaktfläche zumindest in der Ausgangsposition stets planparallel zueinander ausrichten. Zur Relativpositionierung der ersten und zweiten Kupplungseinheit entlang der Hauptebene weist eine beiden Kupplungseinheiten vorzugsweise wenigstens ein Kopplungselement auf, während die andere der beiden Kupplungseinheiten wenigstens ein komplementäres Gegenkopplungselement aufweist, wobei das Kopplungselement und das Gegenkopplungselement in der Kopplungsposition derart ineinander eingreifen, dass eine Relatiwerschiebung zwischen der ersten und zweiten Kupplungseinheit parallel zur Hauptebene unterbunden wird. Das Kopplungselement weist vorzugsweise einen Kopplungsstift auf, welcher senkrecht zur Hauptebene formschlüssig in ein als Aufnahmeöffnung ausgebildetes Gegenkopplungselement eingreift. Die Kopplungsstifte greifen dabei ausschließlich formschlüssig in die Aufnahmeöffnungen ein, so dass eine Relativbewegung zwischen der ersten und zweiten Kopplungseinheit entlang einer zur Hauptebene senkrechten Richtung durch die Kopplungsstifte nicht behindert wird, sondern entlang der senkrechten Richtung ausschließlich eine Fixierung durch das Zusammenwirken des Verbindungsmittels mit dem wenigstens einen Klemmelement erfolgt. Auf diese Weise wird sichergestellt, dass die erste und die zweite Kopplungseinheit bei einer Kippbewegung des zu haltenden Teils gegenüber der Halterungsvorrichtung auch wirklich entkoppelt werden, wenn bei der Kippbewegung die Auslösekraft überstiegen wird. Vorzugsweise sind drei Kopplungselemente in der Hauptebene antisymmetrisch, d.h. nicht rotationsymmetrisch, um das Verbindungsmittel herum angeordnet. Auf diese Weise fungieren die Kopplungs- und Gegenkopplungselemente gleichzeitig als Verdrehschutz, wenn die erste und zweite Kupplungseinheit miteinander gekoppelt werden. Alternativ ist jedoch auch denkbar, dass die drei Kopplungselemente im Wesentlichen zwischen den Klemmelementen und/oder in der Hauptebene jeweils um 120 Grad zueinander versetzt angeordnet sind.

Gemäß einer bevorzugten Ausführungsform der vorliegenden Erfindung ist vorgesehen, dass die zweite Kupplungseinheit eine Durchgangsöffnung aufweist, wobei das Verbindungsmittel eine sich entlang eines Randbereichs der Durchgangsöffnung erstreckende Wandung umfasst, die wenigstens eine Rastöffnung aufweist, mit welcher das wenigstens eine Klemmelement zur Erzeugung der die Verbindung zwischen dem Klemmelement und dem Verbindungsmittel bewirkenden Klemmkraft wechselwirkt, derart, dass die Verbindung durch eine die Klemmkraft überwindende Auslösekraft automatisch lösbar ist. In vorteilhafter Weise wird ein automatisches Auslösen der Verbindung erwirkt, wenn die Auslösekraft die Klemmkraft übersteigt, da in diesem Fall das wenigstens eine Klemmelement entgegen der Klemmkraft bewegt wird und aus der Rastöffnung rutscht. Die kraft- und formschlüssige Fixierung zwischen der ersten und der zweiten Kupplungseinheit wird sodann aufgehoben. Vorzugsweise weist die Wandung eine Mehrzahl von Rastöffnungen und die Halterungsvorrichtung eine Mehrzahl von Klemmelementen, wobei jeweils ein Klemmelement mit einer Rastöffnung zusammenwirkt. Die Rastöffnungen und Klemmelemente sind vorzugsweise gleichmäßig entlang der Umfangsrichtung der Durchgangsöffnung verteilt, so dass das Verbindungsmittel vorzugsweise zentrisch innerhalb der Wandung fixiert wird.

Gemäß einer bevorzugten Ausführungsform der vorliegenden Erfindung ist vorgesehen, dass der maximale Außendurchmesser der ersten Kupplungseinheit kleiner als der maximale Innendurchmesser der Durchgangsöffnung ist. Dies hat den Vorteil, dass die Verbindung auch bei solchen die Klemmkraft übersteigenden Auslösekräften gelöst wird, die senkrecht zur Hauptebene wirken. Eine Kraft, die senkrecht zur Hauptebene auf das zu haltende Teil wirkt, führt zu einem Lösung der Überlastsicherungskupplung, wenn eine bestimmte Schwelle überschritten wird. Solche Kräfte können beispielsweise auftreten, wenn ein die Halterungsvorrichtung führender Roboter, die Halterungsvorrichtung versehentlich senkrecht vor ein Hindernis fährt. Die erste Kupplungseinheit wird dann durch die Durchgangsöffnung der zweiten Kupplungseinheit durchgedrückt. Alternativ ist auch denkbar, dass auf das zu haltende Teil eine Zugkraft wirkt, durch welche die erste Kupplungseinheit aus der zweiten Kupplungseinheit in Richtung des zu haltenden Teils herausgezogen wird. Eine solche Zugkraft kann beispielsweise auftreten, wenn sich das zu haltende Teil versehentlich an einem Hindernis verharkt hat und ein die Halterungsvorrichtung führender Roboter die Halterungsvorrichtung von dem Hindernis zurückzieht. Für einen Fachmann versteht sich von selbst, dass die Halterungsvorrichtung vorzugsweise natürlich auch, durch solche Kräfte auslösbar ist, die mit einer parallel zur Hauptebene wirkenden Kraftkomponente auf das zu haltende Teil wirken und hierdurch die Klemmkraft überwunden wird. Hierbei wird die erste Kupplungseinheit aus der zweiten Kupplungseinheit insbesondere ausgehebelt.

Gemäß einer bevorzugten Ausführungsform der vorliegenden Erfindung ist vorgesehen, dass die erste Kupplungseinheit entlang der Hauptebene von der Wandung zumindest teilweise umschlossen ist, wobei die Wandung auf einer der erste Kupplungseinheit zugewandten Seite konvex ausgewölbt ist und/oder wobei die erste Kupplungseinheit auf einer der Wandung zugewandten Seite konvex ausgewölbt ist. Vorzugsweise ermöglichen die konvex ausgewölbten Flächen eine Schwenkbewegung der ersten Kupplungseinheit relativ zur zweiten Kupplungseinheit, ohne dass die Gefahr besteht, dass sich die erste und die zweite Kupplungseinheit gegeneinander verkanten. Die Wandung ist vorzugsweise als Kragen ausgebildet, der von der zweiten Kopplungseinheit im Randbereich der Durchgangsöffnung entlang einer zur Hauptebene senkrechten Richtung absteht. Die erste Kupplungseinheit ist bevorzugt ringförmig ausgebildet. Dies hat den Vorteil, dass in einer inneren Ringöffnung des Rings Einstellschrauben erreichbar angeordnet werden können, die vorzugsweise zum Einstellen des die Klemmelemente federbeaufschlagenden Elements, vorzugsweise eine Druckfeder, vorgesehen sind. Somit ist in einfacher Art und Weise eine Anpassung und/oder Nachjustierung der Klemmkraft möglich.

Gemäß einer bevorzugten Ausführungsform der vorliegenden Erfindung ist vorgesehen, dass das Klemmelement auf einer dem Verbindungsmittel zugewandten Seite eine als Kugeloberfläche ausgebildete Kontaktfläche aufweist, welche mittels des Elements in Richtung der Rastöffnung kraftbeaufschlagt ist, wobei die Kontaktfläche zumindest teilweise in die Rastöffnung vorsteht und wobei das Klemmelement vorzugsweise als Kugel ausgebildet ist, dessen maximaler Außendurchmesser größer als der maximale Innendurchmesser der Rastöffnung ist. In vorteilhafter Weise wird die erste Kupplungseinheit somit gegenüber einer Bewegung entlang der Hauptebene, als auch gegenüber einer Bewegung senkrecht zur Hauptebene form- und kraftschlüssig fixiert. Nach dem Auslösen der Überlastsicherungskupplung kann die Verbindung durch erneutes Anordnen der ersten Kupplungseinheit innerhalb der zweiten Kupplungseinheit in einfacher Weise wieder hergestellt werden.

Ein weiterer Gegenstand der vorliegenden Erfindung ist die Verwendung der erfindungsgemäßen Halterungsvorrichtung zur Halterung eines zu haltenden Teils in einem Fahrzeugkarosserie-Fertigungssystem, insbesondere einer Fahrzeugkarosserie-Fertigungsstraße.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Seitenansicht einer Halterungsvorrichtung gemäß einer beispielhaften ersten Ausführungsform der vorliegenden Erfindung.
- **Figuren 2a, 2b**: zeigen eine schematische Aufsicht einer zweiten Kupplungseinheit und eine schematische Seitenansicht einer ersten Kupplungseinheit jeweils einer Halterungsvorrichtung gemäß der beispielhaften ersten Ausführungsform der vorliegenden Erfindung.
- **Figur 3**: zeigt eine schematische Seitenansicht einer Halterungsvorrichtung gemäß einer beispielhaften zweiten Ausführungsform der vorliegenden Erfindung.
- **Figur 4**: zeigt eine schematische Seitenansicht einer zweiten Kupplungseinheit einer Halterungsvorrichtung gemäß der beispielhaften zweiten Ausführungsform der vorliegenden Erfindung.
- **Figuren 5a, 5b, 5c**: zeigen schematische Ansichten einer Halterungsvorrichtung gemäß einer beispielhaften dritten Ausführungsform der vorliegenden Erfindung.
- **Figuren 6a, 6b**: zeigen schematische Ansichten einer Halterungsvorrichtung gemäß einer beispielhaften vierten Ausführungsform der vorliegenden Erfindung.
- **Figuren 7a bis 7e**: zeigen schematische Ansichten einer Halterungsvorrichtung gemäß einer beispielhaften fünften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

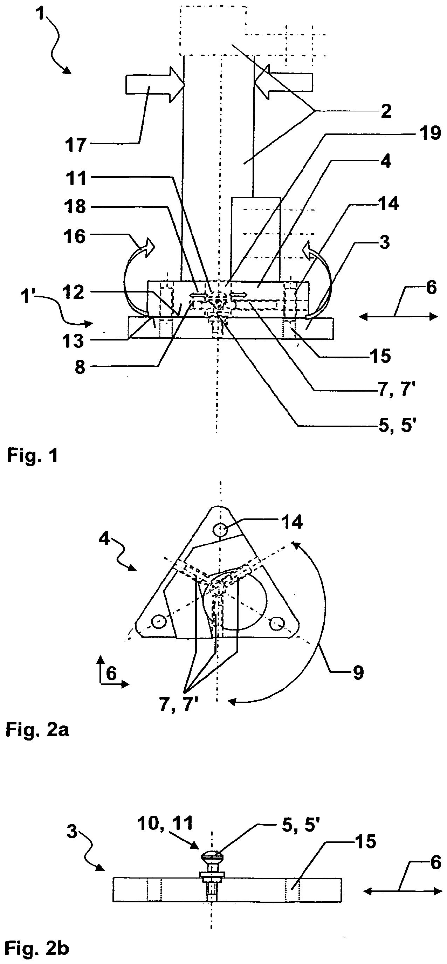

In **Figur 1** ist eine schematische Seitenansicht einer Halterungsvorrichtung 1 gemäß einer beispielhaften ersten Ausführungsform der vorliegenden Erfindung dargestellt. Die Halterungsvorrichtung 1 weist eine Überlastsicherungskupplung 1' zur Halterung wenigstens eines zu haltenden Teils 2 auf, welche eine erste Kupplungseinheit 3 und eine zweite Kupplungseinheit 4 aufweist. Die Überlastsicherungskupplung ist dazu vorgesehen, im Normalbetrieb eine Kopplung zwischen der ersten und zweiten Kupplungseinheit 3, 4 zu gewährleisten und bei einem zwischen der ersten und zweiten Kopplungseinheit 3, 4 wirkenden Drehmoment 16, welches einen definierten Grenzwert überschreitet (Überlast), die Kopplung automatisch aufzuheben. In Figur 1 ist die Haltevorrichtung 1 in einem Zustand illustriert ist, in welchem die erste und zweite Kupplungseinheit 3, 4 miteinander gekoppelt sind. Die erste Kupplungseinheit 3 ist beispielsweise fest mit einer nicht dargestellten Halteplatte oder einem nicht dargestellten Aktuator-Arm verbunden, während die zweite Kupplungseinheit 4 zur Halterung des zu haltenden Teils 2 ausgebildet ist. Im vorliegenden Beispiel umfasst das zu haltende Teil 2 beispielhaft eine Konsole zur Aufnahme von Werkzeugen und/oder Karosseriebauteilen (nur schematisch angedeutet). Die Haltevorrichtung 1 ist zum Einsatz in Fahrzeugkarosserie-Fertigungssystemen vorgesehen, in welchen mittels der Konsole Werkzeuge zur Bearbeitung der Fahrzeugkarosserie oder Rahmenteile zum Aufbau einer Fahrzeugkarosserie gehalten werden.

Die erste Kupplungseinheit 3 weist ein Verbindungsmittel 5' in Form eines Verbindungsstifts auf, über welchen die erste Kupplungseinheit 3 lösbar mit der zweiten Kupplungseinheit 5' koppelbar ist. Der Verbindungsstift 5' steht von der ersten Kupplungseinheit 3 senkrecht zu einer Hauptebene 6 in Richtung der zweiten Kupplungseinheit 5' ab und ragt in eine in der zweiten Kupplungseinheit 4 ausgebildete Ausnehmung 19. An seinem der zweiten Kupplungseinheit 5' zugewandten Ende ist ein Kugelkopf 11 ausgebildet, welcher einen Kupplungsbereich 10 definiert. Die zweite Kupplungseinheit 4 weist drei Klemmelemente 7 in Form von Klemmstiften 7' auf, welche sternförmig in der Hauptebene 6 angeordnet sind. Die Klemmstifte 7' sind in der Hauptebene 6 im Wesentlichen rotationsymmetrisch und jeweils in radialer Richtung um den senkrecht zur Hauptebene 6 ausgerichteten Verbindungsstift 5' ausgerichtet. Jeder der Klemmstifte 7' weist auf seinem dem Verbindungsstift 5' zugewandten Ende eine verjüngte Spitze auf. Die Klemmstifte 7' sind ferner in radialer Richtung verschiebbar gelagert (Verschiebbarkeit 18 angedeutet in Figur 1 durch Pfeile) und in Richtung des Verbindungsstiftes 5' mittels eines als Kraftspeicher ausgebildeten Elements 8 (im vorliegenden Fall eine Druckfeder) elastisch vorgespannt. Die Spitzen werden somit kraft- und formschlüssig auf den Kupplungsbereich 10 und insbesondere auf die Kugelfläche des Kugelkopfes 11 des Verbindungsstiftes 5' gedrückt. Auf diese Weise wird eine Verbindung zwischen den Klemmstiften 7' und dem Verbindungsstift 5' erzeugt. Im vorliegenden Beispiel umfasst die Verbindung eine Kraft-Formschlussverbindung. Die Spitzen werden dabei auf einen Bereich des Kugelkopfes 11 kraftbeaufschlagt, dessen Querschnitt sich in Richtung der zweiten Kupplungseinheit 4 vergrößert. Hierdurch entsteht eine zur Hauptebene 6 senkrecht wirkende Zugkraft auf den Verbindungsstift 5' in Richtung des zweiten Kupplungselements 4 bzw. eine zur Hauptebene 6 senkrecht wirkende Zugkraft auf die Klemmstifte 7' in Richtung des ersten Kupplungselements 3. Eine zur Hauptebene 6 parallele erste Kontaktfläche 12 der ersten Kupplungseinheit 3 und eine ebenfalls zur Hauptebene 6 parallele zweite Kontaktfläche 13 der zweiten Kupplungseinheit 4 werden somit aufeinander gedrückt. Im gekoppelten Zustand ragt der Verbindungsstift 5' vorzugsweise senkrecht zur Hauptebene 6 in die Ausnehmung 19 der zweiten Kopplungseinheit 4 hinein, wobei der Verbindungsstift 5' im Bereich der Ausnehmung 19 ausschließlich durch die drei Klemmstifte 7' kraftschlüssig gehalten wird. Ein weiterer Formschluss zwischen der Wandung der Ausnehmung 19 und dem Verbindungsstift 5' ist nicht vorgesehen, so dass der Verbindungsstift 5' um geringe Auslenkungen parallel zur Hauptebene 6 auslenkbar ist.

Ferner weist die zweite Kupplungseinheit 4 drei zur Hauptebene 6 senkrecht ausgerichtete Kopplungselemente in Form von Kopplungsstifte 14 auf, welche in entsprechende in der ersten Kupplungseinheit 3 ausgebildete komplementäre Gegenkopplungselemente in Form von Aufnahmeöffnungen 15 eingreifen, um eine Relativposition zwischen der ersten und zweiten Kupplungseinheit 3, 4 parallel zur Hauptebene 6 festzulegen. Die Kopplungsstifte 14 greifen dabei - wie aus Figur 1 ersichtlich - nur zu einem geringen Teil in die Aufnahmeöffnungen 15 ein, um einer Kippbewegung der zweiten Kupplungseinheit 4 gegenüber der zweiten Kopplungseinheit 3 möglichst wenig entgegenzuwirken.

Wenn nun durch einen Bedienungs- oder Programmfehler eine Kollision des zu haltenden Teils 2 mit anderen Bauteilen, Werkzeugen oder Konsolen im Fahrzeugkarosserie-Fertigungssystem erfolgt, wirkt auf das zu haltende Teil 2 eine Auslenkungskraft 17 parallel zur Hauptebene 6. Diese Auslenkungskraft 17 führt aufgrund des Hebelarms des zu haltenden Teils 2, sowie der Kopplung zwischen der ersten und zweiten Kupplungseinheit 3, 4 zu einem auf die zweite Kupplungseinheit 4 wirkenden Drehmoment 16, wodurch auf den Verbindungsstift 5' eine Kraft erzeugt wird, welche der von den Klemmstiften 7' ausgehenden Zugkraft entgegenwirkt. Der Verbindungsstift 5' wird aus dem Bereich der Klemmstifte 7' herausgezogen, wobei die Klemmstifte 7' hierdurch in radialer Richtung entgegen ihrer elastischen Vorspannung auseinander gedrückt werden. Wenn die Kraft einen definierten Auslösewert übersteigt, werden die Klemmstifte 7' soweit auseinandergedrückt, dass der Kugelkopf 11 zwischen den Spitzen der Klemmstifte 7' durchrutschen kann und der Verbindungsstift 5' außer Eingriff mit den Klemmstiften 7' gelangt. Der Kraftschluss zwischen der ersten und zweiten Kupplungseinheit 3, 4 wird somit zur Vermeidung von Beschädigungen der Haltevorrichtung oder des zu haltenden Teils 2 aufgehoben. Mit anderen Worten: Der Verbindungsstift 5' wird bei Überlast aus dem Eingriff mit den Klemmstiften 7' ausgeklinkt. Nach einer Entkopplung kann die Kopplung zwischen der ersten Kopplungseinheit 3 und der zweiten Kopplungseinheit 4 in einfacher Weise wiederhergestellt werden, indem die zweite Kopplungseinheit 4 derart auf die erste Kopplungseinheit 3 gedrückt wird, dass der Kugelkopf 11 des Verbindungsstiftes 5' sich in die Klemmstifte 5' nach Art einer Schnappverbindung wieder einklinkt. Sollte die Auslenkungskraft 17 zur Entkopplung nicht ausreichend gewesen sein, wird die zweite Kupplungseinheit 4 relativ zur ersten Kupplungseinheit 3 lediglich um einen vergleichsweise geringen Winkel verschwenkt und federt automatisch in seine Ausgangslage zurück, sobald die Auslenkungskraft 17 entsprechend nachlässt.

Die zur Entkopplung minimal notwendige Auslösekraft 17 kann optional auf zwei verschiedene Arten eingestellt werden. Zum einen ist denkbar, dass die elastische Vorspannung der Klemmstifte 7' in Richtung des Verbindungsstiftes 5' jeweils justierbar ist. Hierzu wird beispielsweise mittels einer Spannungsschraube die Spannung einer Spiralfeder eingestellt, welche jeweils an einem dem Verbindungsstift 5' abgewandten Ende der Klemmstifte 7' angeordnet ist und die Klemmstifte 7' jeweils in Richtung des Verbindungsstiftes 5' federbeaufschlagt. Alternativ ist denkbar, dass der Verbindungsstift 5' ein Außengewinde an seinem der ersten Kopplungseinheit 3 zugewandten Schaftende aufweist, welches in ein entsprechendes Gegengewinde im Körper des ersten Kupplungseinheit 3 eingeschraubt ist. Der Abstand zwischen dem Kugelkopf 11 und der ersten Kontaktfläche 12 kann durch Drehen des Verbindungsstiftes 5' relativ zum übrigen ersten Kupplungselement 3 eingestellt werden. Hierdurch wird die Relativposition zwischen dem Kugelkopf 11 und den Spitzen 8 der Klemmstifte 7' derart verändert, dass die Spitzen auf unterschiedliche Bereiche der Kugelfläche einwirken und somit die zum Auslösen minimal benötigte Kraft verändert wird. Wenn die Spitzen beispielsweise auf dem Bereich der Kugelfläche mit dem größten Umfang (Äquatorbereich) angreifen, ist die benötigte Auslösekraft 17 minimal. Wenn hingegen die Spitzen gerade unterhalb des Kugelkopfes 11 im Übergangsbereich zwischen Schaft und Kugelkopf 11 angreifen ist die benötigte Auslösekraft 17 maximal.

In den **Figuren 2a und 2b** sind eine schematische Aufsicht einer zweiten Kupplungseinheit 4 und eine schematische Seitenansicht einer ersten Kupplungseinheit 3 jeweils einer Halterungsvorrichtung 1 gemäß der beispielhaften ersten Ausführungsform der vorliegenden Erfindung dargestellt. In Figur 2a ist die rotationsymmetrische und radiale Anordnung der drei Klemmstifte 7' zu erkennen, welche jeweils um einen Winkel 9 von 120 Grad zueinander versetzt angeordnet sind. Zwischen zwei benachbarten Klemmstifte 7' ist jeweils ein Kopplungsstift 14 angeordnet, so dass die drei Kopplungsstifte 14 ebenfalls rotationsymmetrisch um den nicht dargestellten Verbindungsstift 5' angeordnet sind. Der rotationssymmetrische Aufbau der zweiten Kupplungseinheit 4 in der Haupteben 6 gewährleistet, dass die Auslösekraft zur Entkopplung für alle auf das Werkzeugglied 2 parallel zur Hauptebene 6 wirkende Auslenkungskräfte 17 im Wesentlichen gleich sind. Gleichzeitig wird eine Zentrierung des Verbindungsstiftes 5' und somit eine vergleichsweise präzise Positionierung des Werkzeuggliedes 2 relativ zur Halterungsvorrichtung 1 erzielt. In Figur 2b ist eine Detailansicht der ersten Kopplungseinheit 3 illustriert, in welcher der Verbindungsstift 5' und insbesondere der Kugelkopf 11 des Verbindungsstiftes 5' deutlich zu erkennen ist.

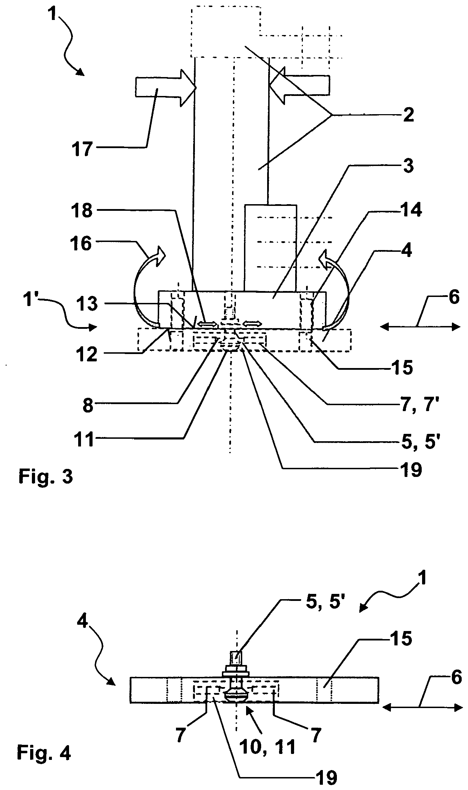

In **Figur 3** ist eine schematische Seitenansicht einer Halterungsvorrichtung 1 gemäß einer beispielhaften zweiten Ausführungsform der vorliegenden Erfindung dargestellt, wobei die zweite Ausführungsform im Wesentlichen der in Figur 1 illustrierten ersten Ausführungsform gleicht, wobei bei der zweiten Ausführungsform die erste Kupplungseinheit 3 zur Aufnahme des zu haltenden Teils 2 vorgesehen ist und die zweite Kupplungseinheit 4 beispielsweise fest mit einer nicht abgebildeten Halteplatte oder einem nicht abgebildeten Aktuator-Arm verbunden ist. Der Verbindungsstift 5' ist demnach über die erste Kupplungseinheit 3 mit dem Werkzeugglied 2 verbunden, während die Klemmstifte 7' über das zweite Kupplungselement 4 mit der Halterplatte oder dem Aktuator-Arm verbunden sind. Das zweite Kupplungselement 4 weist eine zentrale Ausnehmung 19 auf und ist vorzugsweise ringförmig ausgebildet, wobei im Kopplungszustand der Kugelkopf 11 des Verbindungsstiftes 5' in die zentrale Ausnehmung 19 ragt und dort in Eingriff mit den Klemmstiften 7' ist. Der Kopplungs- und Entkopplungsmechanismus arbeitet analog zur anhand der Figur 1 beschriebenen ersten Ausführungsform der erfindungsgemäßen Halterungsvorrichtung 1.

In **Figur 4** ist eine schematische Seitenansicht einer zweiten Kupplungseinheit 4 einer Halterungsvorrichtung 1 gemäß der beispielhaften zweiten Ausführungsform der vorliegenden Erfindung dargestellt, wobei zu Illustrationszwecken ferner der Verbindungsstift 5' dargestellt ist. Die in Figur 4 illustrierte zweite Kupplungseinheit 4 ist im Wesentlichen analog zu der in Figur 2a dargestellten zweiten Kupplungseinheit der Halterungsvorrichtung 1 gemäß der ersten Ausführungsform ausgebildet, wobei die Klemmstifte 7' in die zentrale Ausnehmung 19 hineinragen.

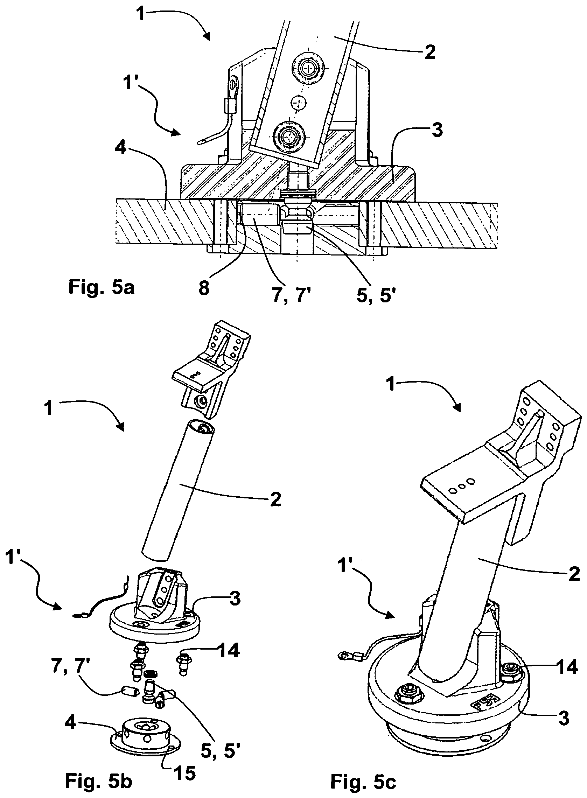

In **Figuren 5a, 5b, 5c** sind schematische Ansichten einer Halterungsvorrichtung 1 gemäß einer beispielhaften dritten Ausführungsform der vorliegenden Erfindung dargestellt, wobei die dritte Ausführungsform im Wesentlichen der in Figur 3 illustrierten zweiten Ausführungsform gleicht, wobei die Grundflächen der ersten und zweiten Kupplungseinheit 3, 4 nicht dreieckig, sondern im Wesentlichen rund ausgebildet sind. In Figur 5a ist eine Schnittbildansicht der Halterungsvorrichtung 1 in der Kupplungsposition dargestellt, während in Figur 5c eine perspektivische Ansicht der Halterungsvorrichtung 1 in der Kupplungsdarstellung dargestellt ist. In Figur 5b ist eine schematische Explosionsdarstelllung der Halterungsvorrichtung 1 illustriert. Das zu haltende Teil 2 ist jeweils mittels Schraubverbindungen an der ersten Kupplungseinheit 3 befestigt.

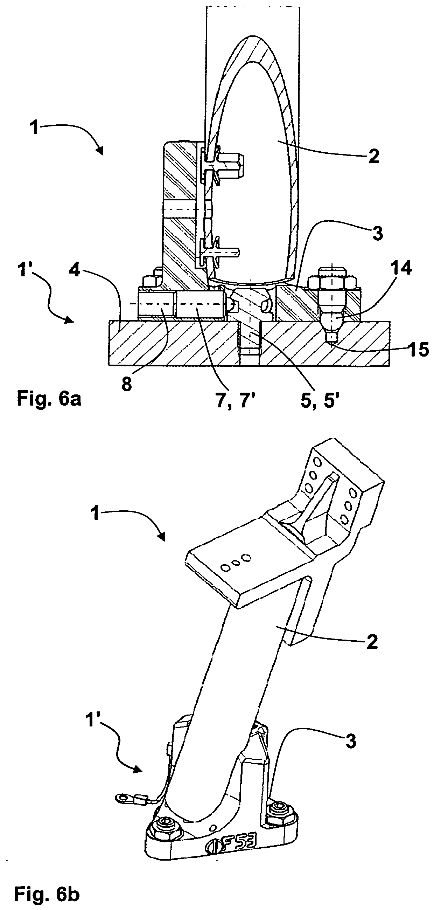

In **Figuren 6a, 6b** sind schematische Ansichten einer Halterungsvorrichtung 1 gemäß einer beispielhaften vierten Ausführungsform der vorliegenden Erfindung dargestefft, wobei die vierte Ausführungsform im Wesentlichen der in Figur 1 illustrierten ersten Ausführungsform gleicht. Die Kopplungselemente 14 sind im vorliegenden Beispiel als Kugelelemente ausgebildet. In Figur 6a ist eine Schnittbildansicht und in Figur 6b eine perspektivische Ansicht der Halterungsvorrichtung 1 jeweils in der Kupplungsposition dargestellt.

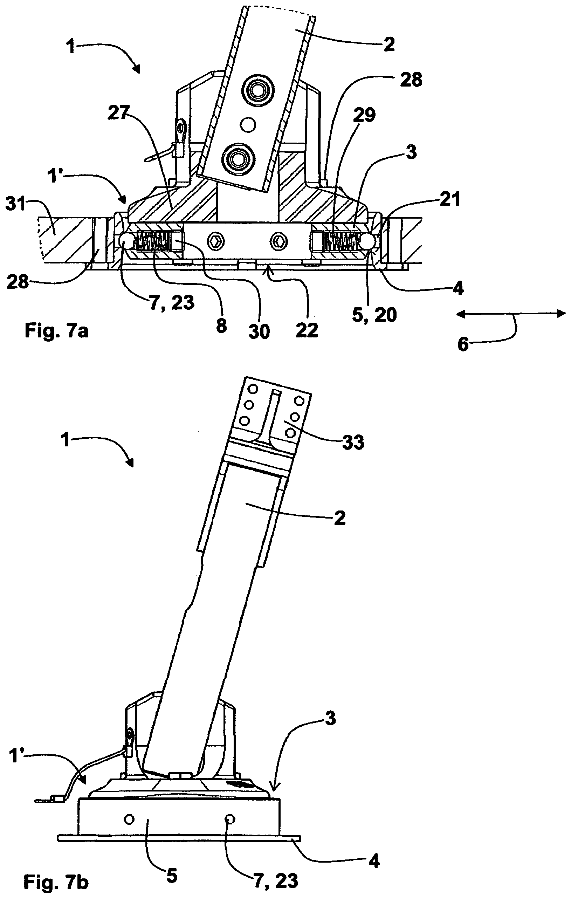

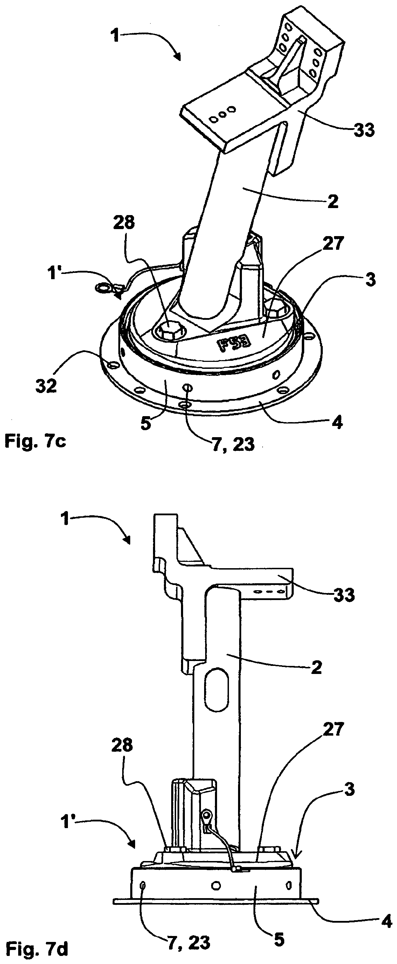

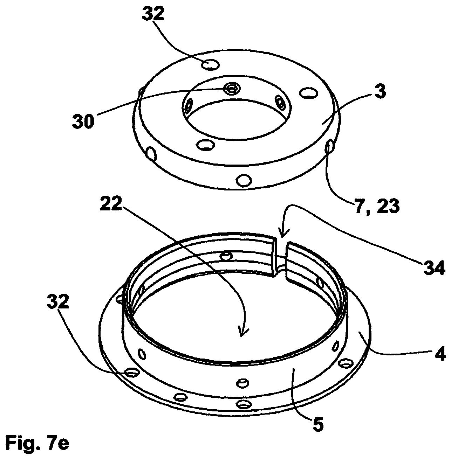

In **Figuren 7a bis 7e** sind schematische Ansichten einer Halterungsvorrichtung 1 gemäß einer beispielhaften fünften Ausführungsform der vorliegenden Erfindung dargestellt. Die Halterungsvorrichtung 1 weist eine Überlastsicherungskupplung 1' zur Halterung wenigstens eines zu haltenden Teils 2 auf, welche eine erste Kupplungseinheit 3 und eine zweite Kupplungseinheit 4 aufweist. Die Überlastsicherungskupplung 1' ist dazu vorgesehen, im Normalbetrieb eine Kopplung zwischen der ersten und zweiten Kupplungseinheit 3, 4 zu gewährleisten und bei einem zwischen der ersten und zweiten Kopplungseinheit 3, 4 wirkenden Kraft, welche einen definierten Grenzwert überschreitet (Überlast), die Kopplung automatisch aufzuheben.

In Figuren 7a, 7b, 7c und 7b ist die Haltevorrichtung 1 jeweils in einem Zustand illustriert, in welchem die erste und zweite Kupplungseinheit 3, 4 miteinander gekoppelt sind. Die zweite Kupplungseinheit 4 ist beispielsweise mittels Befestigungsschrauben 28 fest mit einer Halteplatte 31 verschraubt, während die erste Kupplungseinheit 3 zur Halterung des zu haltenden Teils 2 ausgebildet ist. Im vorliegenden Beispiel umfasst das zu haltende Teil 2 beispielhaft eine Konsole zur Aufnahme von Werkzeugen und/oder Karosseriebauteilen (nicht abgebildet). Die Haltevorrichtung 1 ist zum Einsatz in Fahrzeugkarosserie-Fertigungssystemen vorgesehen, in welchen mittels der Konsole Werkzeuge zur Bearbeitung der Fahrzeugkarosserie oder Rahmenteile zum Aufbau einer Fahrzeugkarosserie gehalten werden.

Die Konsole umfasst einen Konsolenfuß 27 und ein mit dem Konsolenfuß verschraubtes Rohr, welches einen Konsolenkopf 33 trägt. Der Konsolenfuß 27 ist mittels dreier Befestigungsschrauben 28 mit der ersten Kupplungseinheit 3 fest verbunden. Die erste Kupplungseinheit 3 ist als scheibenförmiger Ring ausgebildet. Im Ring sind eine Mehrzahl von radialen Bohrungen 29 ausgebildet. In jeder der Bohrungen 29 ist ein als Kugel 23 ausgebildetes Klemmelement 7, sowie ein als Druckfeder ausgebildetes Element 8 angeordnet. Ein Endbereich der Druckfeder stützt sich jeweils auf einer Madenschraube 30 ab, während der andere Endbereich die Kugel 23 in radialer Richtung nach Außen federelastisch vorspannt. Mittels der Madenschraube 30 kann dabei jeweils die Federspannung stufenlos eingestellt werden. Die zweite Kupplungseinheit 4 weist eine Durchgangsöffnung 22 auf, von dessen Randbereich ein als Verbindungsmittel 5 fungierender Kragen senkrecht zur Hauptebene 6 in Richtung der Konsole absteht. Der Kragen bildet eine Wandung 20 der Durchgangsöffnung 22 und weist eine Mehrzahl von Rastöffnungen 21 auf. Der maximale Außendurchmesser der Durchgangsöffnung 22 ist dabei größer als der maximale Außendurchmesser der ersten Kupplungseinheit 3, so dass die erste Kupplungseinheit 3 entlang einer zur Hauptebene 6 senkrechten Richtung durch die Durchgangsöffnung 22 bewegbar ist. Im abgebildeten Kopplungszustand befindet sich die erste Kupplungseinheit 3 in der gleichen Ebene wie die zweite Kupplungseinheit 4, so dass die erste Kupplungseinheit 3 von der zweiten Kupplungseinheit 4 in der Hauptebene 6 zumindest teilweise umrahmt wird. Die Rastöffnungen 21 sind auf dem Kragen in Umfangsrichtung derart verteilt, dass jeweils eine Kugel 23 in genau eine Rastöffnung 21 teilweise vorsteht. Der Kugeln 23 weisen einen maximalen Außendurchmesser auf, der größer als der maximale Innendurchmesser der Rastöffnungen 21 ist, so dass die Kugeln 23 nicht durch die Rastöffnungen 21 durchrutschen können. Aufgrund der Druckfedern sind die Kugeln 23 dann in die Rastöffnungen 21 elastisch vorgespannt, so dass die erste Kupplungseinheit 3 in der zweiten Kupplungseinheit 4 kraft- und formschlüssig fixiert wird. Die Klemmkraft wird dabei durch die mittels der Madenschrauben 30 einstellbaren Federkräfte der einzelnen Druckfedern bestimmt. Wenn nun auf das zu haltende Teil 2 eine Kraft parallel und/oder senkrecht zur Hauptebene 6 wirkt, wird die erste Kupplungseinheit 3 relativ zur zweiten Kupplungseinheit 4 bewegt. Wenn die Kraft eine vordefinierte Auslösekraft erreicht, die die Klemmkraft übersteigt, werden die Druckfedern zumindest teilweise komprimiert und zumindest einige der Kugeln 23 rutschen aus den Rastöffnungen 21 heraus. Die kraft- und formschlüssige Verbindung zwischen der ersten und der zweiten Kupplungseinheit 3, 4 wird hierdurch aufgehoben und die erste Kupplungseinheit 3 automatisch freigegeben. Auf diese Weise wird sichergestellt, dass im Falle von Überlast keine Schäden an der Haltevorrichtung 1, an den zu haltenden Bauteilen und/oder an einem die Haltevorrichtung 1 haltenden Roboter entstehen. Der maximale Außendurchmesser der ersten Kupplungseinheit 3 ist dabei kleiner als der maximale Innendurchmesser der Durchgangsöffnung 22, so dass bei einer auf das zu haltende Teil senkrecht zur Hauptebene 6 in Richtung des Konsolenfuß 27 wirkenden Überlast, die Kopplung zwischen der ersten und der zweiten Kupplungseinheit 3, 4 aufgehoben wird und die erste Konsoleneinheit 3 durch die Durchgangsöffnung 22 in der zweiten Konsoleneinheit 4 gedrückt wird. Die Wandung 20 der zweiten Kupplungseinheit 4 ist auf einer der ersten Kupplungseinheit 3 zugewandten Seite konvex ausgewölbt, während die erste Kupplungseinheit 3 auf einer der Wandung 20 zugewandten Seite konvex ausgewölbt ist. Auf diese Weise wird auch eine Schwenkbewegung der ersten Kupplungseinheit 3 gegenüber der zweiten Kupplungseinheit 4, insbesondere um eine zur Hauptebene 6 parallele Schwenkachse ermöglicht, ohne dass die erste Kupplungseinheit 3 mit der Wandung 20 verkantet. In vorteilhafter Weise kann das zu haltende Teil bei Überlast somit in jede beliebige Richtung ausweichen. Die Überlastsicherungskopplung wird insbesondere dann gelöst, wenn auf das zu haltende Teil 2 Kräfte parallel und/oder senkrecht zur Hauptebene 6 wirken, die ein durch die einstellbare Klemmkraft vorbestimmte Maß übersteigen. Alternativ ist natürlich auch denkbar, dass die Kugeln als in den Bohrungen 29 angeordneten Klemmstifte ausgebildet sind, die auf einer dem Kragen zugewandten Seite eine kugelförmig ausgebildete Kontaktfläche 24 aufweisen.

In Figur 6e sind die erste und die zweite Kupplungseinheit 3, 4 in einer perspektivischen Detailansicht dargestellt. Die erste und die zweite Kupplungseinheit 3, 4 weisen ferner Befestigungsbohrungen 32 zur Aufnahme von Befestigungsschrauben 28 auf. Die zweite Befestigungseinheit 4 weist insbesondere einen radialen Schlitz 34 auf, welcher eine (erneute) Anordnung der ersten Befestigungseinheit 3 innerhalb der zweiten Befestigungseinheit 4, beispielsweise nach dem Auslösen der Überlastsicherung, erleichtert.

### BEZUGSZEICHENLISTE

- 1: Halterungsvorrichtung
- 1': Überlastsicherung
- 2: Zu haltendes Teil
- 3: Erste Kupplungseinheit
- 4: Zweite Kupplungseinheit
- 5: Verbindungsmittel
- 5': Verbindungsstift
- 6: Hauptebene
- 7: Klemmelement
- 7': Klemmstift
- 8: Element
- 9: Winkel
- 10: Kupplungsbereich
- 11: einen Kugelkopf
- 12: Erste Kontaktfläche
- 13: Zweite Kontaktfläche
- 14: Kopplungselement
- 15: Gegenkopplungselement
- 16: Drehmoment
- 17: Auslenkungskraft
- 18: Verschiebbarkeit
- 19: Ausnehmung
- 20: Wandung
- 21: Rastöffnung
- 22: Durchgangsöffnung
- 23: Kugel
- 24: Kontaktfläche
- 27: Konsolenfuß
- 28: Befestigungsschrauben
- 29: Bohrungen
- 30: Madenschrauben
- 31: Halteplatte
- 32: Befestigungsbohrungen
- 33: Konsolenkopf
- 34: Schlitz

## Patentansprüche

1. Halterungsvorrichtung (1) zur Halterung wenigstens eines zu haltenden Teils (2) in einem Fahrzeugkarosserie-Fertigungssystem, **dadurch gekennzeichnet, dass** die Halterungsvorrichtung (1) eine Überlastsicherungskupplung (1') aufweist, wobei die Überlastsicherungskupplung (1') eine erste und eine zweite Kupplungseinheit (3, 4) aufweist, wobei eine der ersten und zweiten Kupplungseinheit (3, 4) ein Verbindungsmittel (5) aufweist, welches lösbar mit der anderen Kupplungseinheit (4, 3) koppelbar ist und wobei die andere Kupplungseinheit (4, 3) wenigstens ein Klemmelement (7) aufweist, dem ein Element (8) zur Erzeugung einer eine Verbindung zwischen dem Klemmelement (7) und dem Verbindungsmittel (5) bewirkenden Klemmkraft zugeordnet ist, derart, dass die Verbindung durch eine die Klemmkraft überwindende Auslösekraft automatisch lösbar ist wobei eine der beiden Kupplungseinheiten (3, 4) wenigstens ein Kopplungselement (14) und die andere Kupplungseinheit (3, 4) wenigstens ein komplementäres Gegenkopplungselement (15) aufweist, wobei das Kopplungselement (14) und das Gegenkopplungselement (15) senkrecht zu einer Hauptebene (6) formschlüssig ineinander eingreifen.

2. Halterungsvorrichtung (1) nach Anspruch 1, **dadurch gekennzeichnet, dass** die zweite Kupplungseinheit (4) wenigstens drei in einer Hauptebene (6) radial angeordnete Klemmelemente (7) aufweist, welche im Wesentlichen rotationssymmetrisch um das zur Hauptebene (6) senkrecht ausgerichtete Verbindungsmittel (5) angeordnet sind.

3. Halterungsvorrichtung (1) nach einem der vorhergehenden Ansprüche, **dadurch gekennzeichnet, dass** das wenigstens eine Klemmelement (7) mittels des Elements (8) in Richtung des Verbindungsmittels (5) elastisch vorgespannt ist, wobei das Element (8) bevorzugt einen Kraftspeicher zur Kraftbeaufschlagung des wenigstens einen Klemmelements (7) in Richtung des Verbindungsmittels (5) umfasst und wobei besonders bevorzugt ein Mittel zur Einstellung der in Richtung des Verbindungsmittels (5) wirkenden Kraft des Kraftspeichers vorgesehen ist.

4. Halterungsvorrichtung (1) nach einem der Ansprüche 2 oder 3, **dadurch gekennzeichnet, dass** die drei Klemmelemente (7) in der Hauptebene (6) jeweils um einen Winkel (9) von 120 Grad zueinander versetzt angeordnet sind und/oder dass die wenigstens drei Klemmelemente (7) jeweils auf einer dem Verbindungsmittel (5) zugewandten Seite eine sich verjüngende Spitze aufweisen und/oder dass die wenigstens drei Klemmelemente (7) jeweils in radialer Richtung verschiebbar gelagert sind.

5. Halterungsvorrichtung (1) nach einem der vorhergehenden Ansprüche, **dadurch gekennzeichnet, dass** das Verbindungsmittel (5) in einem Kupplungsbereich (10) eine Querschnittänderung aufweist, wobei das wenigstens eine Klemmelement (7) im Kupplungsbereich (10) form- und/oder kraftschlüssig auf das Verbindungsmittel (5) einwirkt, wobei das Verbindungsmittel (5) im Kupplungsbereich (10) vorzugsweise einen Kugelkopf (11) aufweist, auf dessen Kugelfläche das wenigstens eine Klemmelement (7) einwirkt.

6. Halterungsvorrichtung (1) nach Anspruch 5, **dadurch gekennzeichnet, dass** zur Einstellung der Auslösekraft die Relativposition zwischen dem Kupplungsbereich (10) und dem wenigstens einen Klemmelement (7) entlang einer zur Hauptebene (6) senkrechten Richtung einstellbar ist

7. Halterungsvorrichtung (1) nach einem der vorhergehenden Ansprüche, **dadurch gekennzeichnet, dass** die erste Kupplungseinheit (3) eine zur Hauptebene parallele erste Kontaktfläche (12) und die zweite Kupplungseinheit (4) eine zur ersten Kontaktfläche (12) im Wesentlichen parallele zweite Kontaktfläche (13) aufweist, wobei die erste und zweite Kontaktfläche (12, 13) zumindest teilweise aneinander anliegen.

8. Halterungsvorrichtung (1) nach einem der vorhergehenden Ansprüche, **dadurch gekennzeichnet, dass** wenigstens drei Kopplungselemente (14) in der Hauptebene (6) antisymmetrisch um das Verbindungsmittel (5) herum angeordnet sind.

9. Halterungsvorrichtung (1) nach einem der Ansprüche 1, 3, 4 oder 5, **dadurch gekennzeichnet, dass** die zweite Kupplungseinheit (4) eine Durchgangsöffnung (22) aufweist, wobei das Verbindungsmittel (5) eine sich entlang eines Randbereichs der Durchgangsöffnung (22) erstreckende Wandung (20) umfasst, die wenigstens eine Rastöffnung aufweist, mit welcher das wenigstens eine Klemmelement (7) zur Erzeugung der die Verbindung zwischen dem Klemmelement (7) und dem Verbindungsmittel (5) bewirkenden Klemmkraft wechselwirkt, derart, dass die Verbindung durch eine die Klemmkraft überwindende Auslösekraft automatisch lösbar ist.

10. Halterungsvorrichtung (1) nach Anspruch 9, **dadurch gekennzeichnet, dass** die erste Kupplungseinheit (3) entlang der Hauptebene (6) von der Wandung (20) zumindest teilweise umschlossen ist, wobei die Wandung (20) auf einer der erste Kupplungseinheit (3) zugewandten Seite konvex ausgewölbt ist und/oder wobei die erste Kupplungseinheit (3) auf einer der Wandung (20) zugewandten Seite konvex ausgewölbt ist.

11. Halterungsvorrichtung (1) nach einem der Ansprüche 9oder 10, **dadurch gekennzeichnet, dass** der maximale Außendurchmesser der ersten Kupplungseinheit (3) kleiner als der maximale Innendurchmesser der Durchgangsöffnung (22) ist.

12. Halterungsvorrichtung (1) nach einem der Ansprüche 9 bis 11, **dadurch gekennzeichnet, dass** die Wandung (20) als Kragen ausgebildet ist, der von der zweiten Kopplungseinheit (4) im Randbereich der Durchgangsöffnung (22) entlang einer zur Hauptebene (6) senkrechten Richtung absteht und/oder dass die erste Kupplungseinheit (3) ringförmig ausgebildet ist.

13. Halterungsvorrichtung (1) nach einem der Ansprüche 9 bis 12, **dadurch gekennzeichnet, dass** das Klemmelement (7) auf einer dem Verbindungsmittel (5) zugewandten Seite eine als Kugeloberfläche ausgebildete Kontaktfläche (24) aufweist, welche mittels des Elements (8) in Richtung der Rastöffnung (21) kraftbeaufschlagt ist, wobei die Kontaktfläche (24) zumindest teilweise in die Rastöffnung (21) vorsteht und wobei das Klemmelement (7) vorzugsweise als Kugel (23) ausgebildet ist, dessen maximaler Außendurchmesser größer als der maximale Innendurchmesser der Rastöffnung (21) ist.

14. Verwendung einer Halterungsvorrichtung (1) gemäß einem der vorhergehenden Ansprüche zur Halterung eines zu haltenden Teils (2) in einem Fahrzeugkarosserie-Fertigungssystem, insbesondere einer Fahrzeugkarosserie-Fertigungsstraße.

## Claims

1. Retention device (1) for the retention of at least one part (2) to be retained in a vehicle body manufacturing system, **characterized in that** the retention device (1) has an overload protection coupling (1'), wherein the overload protection coupling (1') has a first and a second coupling unit (3, 4), wherein one of the first and second coupling units (3, 4) has a connecting means (5), which is able to be releasably coupled to the other coupling unit (4, 3), and wherein the other coupling unit (4, 3) has at least one clamping element (7), to which an element (8) is associated for producing a clamping force which creates a connection between the clamping element (7) and the connecting means (5), such that the connection is able to be automatically released by a release force which overcomes the clamping force, wherein one of the two coupling units (3, 4) has at least one coupling element (14) and the other coupling unit (3, 4) has at least one complementary counter-coupling element (15), wherein the coupling element (14) and the counter-coupling element (15) engage positively in one another perpendicular to a main plane (6).

2. Retention device (1) according to Claim 1, **characterized in that** the second coupling unit (4) has at least three clamping elements (7) arranged radially in a main plane (6), and which are arranged substantially rotationally symmetrically around the connecting means (5) aligned perpendicular to the main plane (6).

3. Retention device (1) according to one of the preceding claims, **characterized in that** the at least one clamping element (7) is resiliently pretensioned by means of the element (8) in the direction of the connecting means (5), wherein the element (8) preferably comprises an energy storage device for subjecting the at least one clamping element (7) to a force in the direction of the connecting means (5) and wherein particularly preferably a means is provided for adjusting the force of the energy storage device acting in the direction of the connecting means (5).

4. Retention device (1) according to one of Claims 2 or 3, **characterized in that** the three clamping elements (7) in each case are arranged offset to one another in the main plane (6) by an angle (9) of 120 degrees, and/or that the at least three clamping elements (7) in each case have a tapering tip on a side facing the connecting means (5), and/or that the at least three clamping elements (7) are displaceably mounted in each case in the radial direction.

5. Retention device (1) according to one of the preceding claims, **characterized in that** the connecting means (5) has a cross-sectional alteration in a coupling region (10), wherein the at least one clamping element (7) in the coupling region (10) acts positively and/or non-positively on the connecting means (5), wherein the connecting means (5) in the coupling region (10) preferably has a spherical head (11), the at least one clamping element (7) acting on the spherical surface thereof.

6. Retention device (1) according to Claim 5, **characterized in that** for adjusting the release force the relative position between the coupling region (10) and the at least one clamping element (7) is able to be adjusted in a direction perpendicular to the main plane (6).

7. Retention device (1) according to one of the preceding claims, **characterized in that** the first coupling unit (3) has a first contact surface (12) parallel to the main plane and the second coupling unit (4) has a second contact surface (13) substantially parallel to the first contact surface (12), wherein the first and second contact surface (12, 13) bear at least partially against one another.

8. Retention device (1) according to one of the preceding claims, **characterized in that** at least three coupling elements (14) are arranged in the main plane (6) antisymmetrically around the connecting means (5).

9. Retention device (1) according to one of Claims 1, 3, 4, or 5, **characterized in that** the second coupling unit (4) has a through-opening (22), wherein the connecting means (5) has a wall (20) extending along an edge region of the through-opening (22), which has at least one latching opening, with which the at least one clamping element (7) interacts to produce the clamping force effecting the connection between the clamping element (7) and the connecting means (5), such that the connection is able to be automatically released by a release force overcoming the clamping force.

10. Retention device (1) according to Claim 9, **characterized in that** the first coupling unit (3) is at least partially enclosed along the main plane (6) by the wall (20), wherein the wall (20) is bulged in a convex manner on a side facing the first coupling unit (3) and/or wherein the first coupling unit (3) is bulged in a convex manner on a side facing the wall (20).

11. Retention device (1) according to one of Claims 9 or 10, **characterized in that** the maximum external diameter of the first coupling unit (3) is smaller than the maximum internal diameter of the through-opening (22).

12. Retention device (1) according to one of Claims 9 to 11, **characterized in that** the wall (20) is configured as a collar which protrudes from the second coupling unit (4) in the edge region of the through-opening (22) in a direction perpendicular to the main plane (6) and/or that the first coupling unit (3) is of annular configuration.

13. Retention device (1) according to one of Claims 9 to 12, **characterized in that** the clamping element (7) on a side facing the connecting means (5), has a contact surface (24) configured as a spherical surface, which is subjected to a force by means of the element (8) in the direction of the latching opening (21), wherein the contact surface (24) protrudes at least partially into the latching opening (21), and wherein the clamping element (7) is preferably configured as a ball (23), the maximum external diameter thereof being greater than the maximum internal diameter of the latching opening (21).

14. Use of a retention device (1) according to one of the preceding claims for the retention of a part to be retained (2) in a vehicle body manufacturing system, in particular of a vehicle body production line.

## Revendications

1. Dispositif de support (1) destiné à supporter une pièce (2) à maintenir dans un système de fabrication de carrosseries de véhicules, **caractérisé en ce que** le dispositif de support (1) présente un accouplement limiteur de couple (1'), dans lequel l'accouplement limiteur de couple (1') présente une première et une deuxième unités d'accouplement (3, 4), dans lequel une des première et deuxième unités d'accouplement (3, 4) présente un moyen de liaison (5), qui peut être couplé de façon séparable à l'autre unité d'accouplement (4, 3) et dans lequel l'autre unité d'accouplement (4, 3) présente au moins un élément de serrage (7), auquel est associé un élément (8) pour produire une force de serrage opérant une liaison entre l'élément de serrage (7) et le moyen de liaison (5), de telle manière que la liaison soit séparable automatiquement par une force de libération dépassant la force de serrage, dans lequel une des deux unités d'accouplement (3, 4) présente au moins un élément de couplage (14) et l'autre unité d'accouplement (3, 4) présente au moins un élément de couplage opposé (15), dans lequel l'élément de couplage (14) et l'élément de couplage opposé (15) s'engagent l'un dans l'autre par emboîtement perpendiculairement à un plan principal (6).

2. Dispositif de support (1) selon la revendication 1, **caractérisé en ce que** la deuxième unité d'accouplement (4) présente au moins trois éléments de serrage (7) disposés radialement dans un plan principal (6), qui sont disposés essentiellement de façon symétrique en rotation autour du moyen de liaison (5) orienté perpendiculairement au plan principal (6).

3. Dispositif de support (1) selon l'une quelconque des revendications précédentes, **caractérisé en ce que** ledit au moins un élément de serrage (7) est précontraint élastiquement au moyen de l'élément (8) en direction du moyen de liaison (5), dans lequel l'élément (8) comprend de préférence un accumulateur de force destiné à exercer une force sur ledit au moins un élément de serrage (7) en direction du moyen de liaison (5) et dans lequel il est particulièrement préférable de prévoir un moyen pour le réglage de la force de l'accumulateur de force agissant en direction du moyen de liaison (5).

4. Dispositif de support (1) selon une des revendications 2 ou 3, **caractérisé en ce que** les trois éléments de serrage (7) sont disposés dans le plan principal (6) respectivement avec un décalage d'un angle (9) de 120° l'un par rapport à l'autre et/ou **en ce que** lesdits au moins trois éléments de serrage (7) présentent chacun une pointe qui se rétrécit sur un côté tourné vers le moyen de liaison (5) et/ou **en ce que** lesdits au moins trois éléments de serrage (7) sont chacun montés de façon déplaçable en direction radiale.

5. Dispositif de support (1) selon l'une quelconque des revendications précédentes, **caractérisé en ce que** le moyen de liaison (5) présente dans une zone de couplage (10) un changement de section transversale, dans lequel ledit au moins un élément de serrage (7) agit dans la zone de couplage (10) par emboîtement et/ou par adhérence sur le moyen de liaison (5), dans lequel le moyen de liaison (5) présente dans la zone de couplage (10) de préférence une tête sphérique (11), sur la surface sphérique de laquelle ledit au moins un élément de serrage (7) agit.

6. Dispositif de support (1) selon la revendication 5, **caractérisé en ce que** la position relative entre la zone d'accouplement (10) et ledit au moins un élément de serrage (7) est réglable le long d'une direction perpendiculaire au plan principal (6) pour le réglage de la force de libération.

7. Dispositif de support (1) selon l'une quelconque des revendications précédentes, **caractérisé en ce que** la première unité d'accouplement (3) présente une première face de contact (12) parallèle au plan principal et la deuxième unité d'accouplement (4) présente une deuxième face de contact (13) essentiellement parallèle à la première face de contact (12), dans lequel la première et la deuxième faces de contact (12, 13) s'appliquent au moins partiellement l'une sur l'autre.

8. Dispositif de support (1) selon l'une quelconque des revendications précédentes, **caractérisé en ce qu'**au moins trois éléments de couplage (14) sont disposés dans le plan principal (6) de façon antisymétrique autour du moyen de liaison (5).

9. Dispositif de support (1) selon l'une quelconque des revendications 1, 3, 4 ou 5, **caractérisé en ce que** la deuxième unité d'accouplement (4) présente une ouverture de passage (22), dans lequel le moyen de liaison (5) comprend une paroi (20) s'étendant le long d'une région de bord de l'ouverture de passage (22), qui présente au moins une ouverture d'encliquetage, avec laquelle ledit au moins un élément de serrage (7) interagit pour la production de la force de serrage opérant la liaison entre l'élément de serrage (7) et le moyen de liaison (5), de telle manière que la liaison soit séparable automatiquement par une force de libération dépassant la force de serrage.

10. Dispositif de support (1) selon la revendication 9, **caractérisé en ce que** la première unité d'accouplement (3) est au moins en partie entourée par la paroi (20) le long du plan principal (6), dans lequel la paroi (20) présente une courbure convexe sur un côté tourné vers la première unité d'accouplement (3) et/ou dans lequel la première unité d'accouplement (3) présente une courbure convexe sur un côté tourné vers la paroi (20).

11. Dispositif de support (1) selon une des revendications 9 ou 10, **caractérisé en ce que** le diamètre extérieur maximal de la première unité d'accouplement (3) est plus petit que le diamètre intérieur maximal de l'ouverture de passage (22).

12. Dispositif de support (1) selon l'une quelconque des revendications 9 à 11, **caractérisé en ce que** la paroi (20) est réalisée en forme de collet, qui est saillant sur la deuxième unité d'accouplement (4) dans la région de bord de l'ouverture de passage (22) le long d'une direction perpendiculaire au plan principal (6) et/ou **en ce que** la première unité d'accouplement (3) est réalisée en forme d'anneau.

13. Dispositif de support (1) selon l'une quelconque des revendications 9 à 12, **caractérisé en ce que** l'élément de serrage (7) présente sur un côté tourné vers le moyen de liaison (5) une face de contact (24) réalisée sous forme de surface sphérique, qui est soumise à une force au moyen de l'élément (8) en direction de l'ouverture d'encliquetage (21), dans lequel la face de contact (24) fait saillie au moins en partie dans l'ouverture d'encliquetage (21) et dans lequel l'élément de serrage (7) est réalisé de préférence sous forme de bille (23), dont le diamètre extérieur maximal est plus grand que le diamètre intérieur maximal de l'ouverture d'encliquetage (21).

14. Utilisation d'un dispositif de support (1) selon l'une quelconque des revendications précédentes pour le support d'une pièce à maintenir (2) dans un système de fabrication de carrosseries de véhicules, en particulier une ligne de fabrication de carrosseries de véhicules.
